# EUROPÄISCHE PATENTSCHRIFT

(11) **EP 0 615 086 B1**
(45) Veröffentlichungstag und Bekanntmachung des Hinweises auf die Patenterteilung: **08.05.1996**
(21) Anmeldenummer: 93104038.0
(22) Anmeldetag: 12.03.1993
(51) Int. Cl.: F16J 15/32, F02F 11/00

(54) **Verfahren zum Herstellen einer Wellenabdichtung**
Method for making a shaft seal
Procédé de fabrication d'un joint à lèvres

(43) Veröffentlichungstag der Anmeldung: 14.09.1994
(73) Patentinhaber: Dichtungstechnik G. Bruss GmbH & Co. KG, D-22955 Hoisdorf (DE)
(72) Erfinder: vom Schwemm, Michael, W-2300 Kiel-Holtenau (DE); Testroet, Carl-Joseph, W-2071 Hoisdorf (DE); Hering, Jürgen, W-2359 Sievershütten (DE); Upper, Gerd, Dr., W-2071 Hoisdorf (DE); Flossmann, Siegfried, Dr., W-1406 Hohen Neuendorf (DE)
(74) Vertreter: Liesegang, Roland, Dr.-Ing.

(56) Entgegenhaltungen:
- EP-A- 0 120 123
- DE-A- 3 634 735
- US-A- 3 875 654

## Beschreibung

Die Erfindung betrifft ein Verfahren zum Herstellen einer Wellenabdichtung mit den Merkmalen des Oberbegriffs des Anspruchs 1, sowie eine Wellenabdichtung mit den Merkmalen des Oberbegriffs des Anspruchs 5.

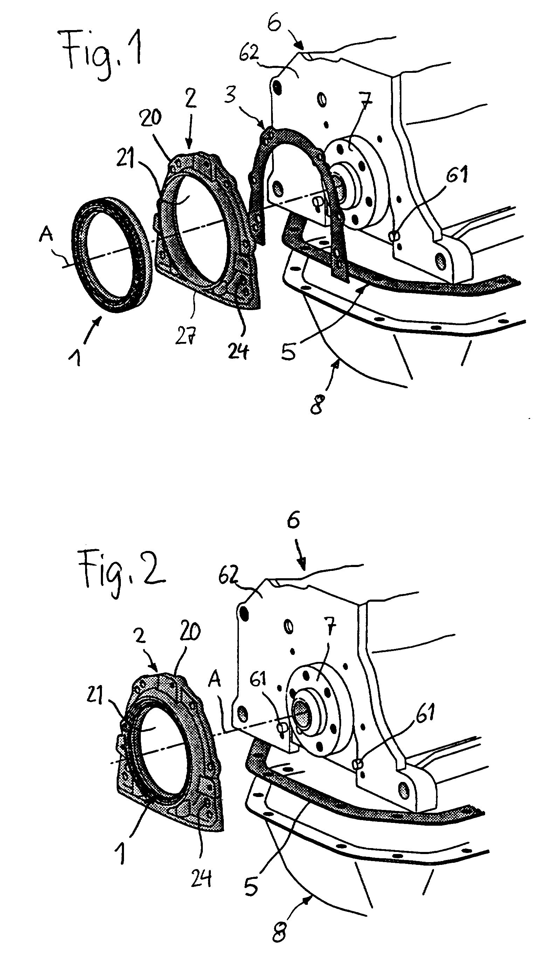

In der auseinandergezogenen Darstellung nach Figur 1 ist der Aufbau einer derartigen Wellenabdichtung für die Abtriebsseite einer Kurbelwelle eines Kraftfahrzeuges dargestellt, wie sie derzeit in der Praxis meistens eingesetzt wird.

Die wesentlichen Teile dieser Kurbelwellenabdichtung sind ein Radial-Wellendichtring 1, eine Dichtungsaufnahme 2 in Form eines Aluminium-Druckgußteiles 20 mit Durchlaßöffnung 21 für eine Kurbelwelle 7, eine Flachdichtung 3 zur Abdichtung der Dichtungsaufnahme 2 gegenüber der Stirnwand 62 des Kurbelgehäuses 6, eine Ölwanne 8 mit Ölwannendichtung 5, die über die Stirnwand 62 des Kurbelgehäuses 6 vorsteht, so daß die Dichtungsaufnahme 2 mit einer Unterfläche 27 daran abdichtend anliegen kann.

Die Herstellung einer solchen Wellenabdichtung erfordert insgesamt vier Arbeitsschritte:
- Einpressen des Radial-Wellendichtringes 1 in die Dichtungsaufnahme 2,
- Montage der Flachdichtung 3,
- Aufbringen eines pastösen Dichtmittels zwischen die Stirnseite der Flachdichtung 3 und die Ölwannendichtung 5,
- Montage der Dichtungsaufnahme 2 mit vormontiertem Radial-Wellendichtring 1 an der Stirnfläche 62 des Motorblocks 6 durch Anschrauben.

Eine derartige vielteilige Lösung bringt vielfache Fehlermöglichkeiten hinsichtlich
Radial-Wellendichtring 1:
   - Beschädigung beim Verpacken, Transport, Auspacken und Vormontage
   - Verkanten beim Einpressen
   - Verwechseln der Einbaulage (federbelastete Dichtlippe weist nach außen anstatt nach innen)
   - Leckage am Außendurchmesser;
Dichtungsaufnahme 2:
   - Beschädigungen in der Bohrung, in die der Radial-Wellendichtring eingepreßt wird
   - Beschädigungen, z.B. Kratzer, an der Dichtfläche zur Flachdichtung 3
   - Beschädigungen, z.B. Kratzer an der Dichtfläche 26 zur Ölwannendichtung 5
   - öffnen von Poren bei der spanenden Bearbeitung der Dichtungsaufnahme 2
Flachdichtung 3:

   - Beschädigung beim Verpacken, Transport, Auspacken und Vormontage
   - Maßtoleranzen
   - das pastöse Dichtmittel zwischen Stirnseite der Flachdichtung 3 und Ölwannendichtung 5 (erforderlich für Toleranzausgleich) kann entweder vergessen oder falsch aufgebracht werden.

In der EP-A-0 120 123 und der DE 36 34 735 C2 ist eine Kurbelwellenabdichtung beschrieben, bei der ein Wellendichtring und eine statische Dichtung an eine Dichtungsaufnahme in Gestalt eines topfförmigen Blechkörpers angespritzt werden. Hierzu sind in dem Blechkörper zwischen dem dynamischen Wellendichtring und der statischen Dichtung Nuten und Verbindungskanäle vorgesehen, durch welche das elastomere Material beim Anspritzen von dem Formhohlraum für die eine Dichtung zu demjenigen der anderen Dichtung fließt.

Bei einer solchen Anspritzung ergibt sich ein ungleichmäßiger Druckaufbau beim Füllen des Formhohlraumes für die Dichtlippe des dynamischen Wellendichtringes an den Überlaufkanülen zur statischen Dichtung, so daß die für die Funktion unerläßliche, absolut fehlerfreie Ausbildung im Bereich der Dichtkante nicht gewährleistbar ist.

Aus der EP 0 139 503 B1 ist eine Wellenabdichtung bekannt, bei welcher ein Wellendichtring und eine statische Dichtung an einer Dichtungsaufnahme getrennt voneinander angeformt werden, worauf dann der Dichtungsaufnahme mit den angeformten Dichtungen eine austauschbare Einheit bildet. Die statische Dichtung dichtet bei dieser Konstruktion lediglich zur Stirnseite des Kurbelgehäuses und nicht zur Ölwanne hin ab.

Der Erfindung liegt die Aufgabe zugrunde, ein Verfahren zum Herstellen einer Wellendichtung gemäß dem Oberbegriff des Anspruchs 1 zu schaffen, die im Ergebnis soweit wie möglich an der millionenfach bewährten Ausführung nach Figur 1 orientiert ist, bei der Herstellung die gleiche Prozeßsicherheit aufweist, in der Montage aber noch sicherer und insgesamt kostengünstiger ist, auch im Hinblick auf möglichst geringe Bearbeitung des die Dichtungsaufnahme bildenden Gußteiles.

Zur Lösung dieser Aufgabe dient ein Verfahren nach Patentanspruch 1.

Bei dem Verfahren nach der Erfindung werden also die statische Dichtung und der Wellendichtring nicht über einen gemeinsamen Anguß so angespritzt, daß die Formhohlräume über Verbindungskanäle nacheinander mit dem elastomeren Dichtungsmaterial gefüllt werden, sondern gleichzeitig über jeweils eigene Angußstellen der beiden Dichtungen getrennt voneinander in einem einzigen Arbeitsgang, was zu einer einwandfreien Ausformung beider Dichtungen mit fehlerloser Ausformung der Dichtkante des Wellendichtringes führt. Da die neue, als getrennter Modul vorgefertigte Wellenabdichtung bezüglich Schwingungsverhalten und thermischer Ausdehnung von der Wellenabdichtung nach dem Stand der Technik kaum abweicht, gelten die vorhandenen Erkenntnisse im wesentlichen auch für die neue Wellenabdichtung, was die Erprobung beim Kraftfahrzeughersteller erheblich vereinfacht und mindestens gleiche Zuverlässigkeit im Betrieb erwarten läßt.

Ein wichtiger Vorteil ist ferner, daß die vorhandenen weitgehend automatisierten Montageeinrichtungen ohne Änderungen weiterverwendet werden können.

In einer vorteilhaften Ausgestaltung des Verfahrens nach der Erfindung werden die statische Dichtung über einen oder mehrere Punktangüsse und der Wellendichtring über einen Ringkanal oder Schirm mit zentraler Anspritzung an die Dichtungsaufnahme mit einem einzigen Spritzwerkzeug mit Mehrfachdüsen angespritzt. Dabei ist eine Anspritzung von beiden Seiten der Dichtungsaufnahme her möglich, wobei jedoch das Anspritzen auf der dem Gehäuse zugewandten Seite erfindungsgemäß bevorzugt ist.

Vorteilhafterweise werden mit der statischen Dichtung zusammenhängende Paßelemente zum Anpassen der Dichtungsaufnahme an das Gehäuse mitangespritzt.

Eine mit einem Verfahren nach der Erfindung hergestellte Wellenabdichtung zeichnet sich durch die Merkmale des Anspruchs 5 aus.

Bei einer besonders wichtigen Ausgestaltung dieser Wellenabdichtung gemäß Anspruch 10 ist die Anordnung so getroffen, daß die statische Dichtung mit einem ersten Abschnitt gegenüber dem Gehäuse und mit einem zweiten Abschnitt gegenüber der Ölwannendichtung abdichtet, ohne daß im Zustand vor der Endmontage die statische Dichtung zur ölwannenseitigen zweiten Fläche der Dichtungsaufnahme hin vorsteht. Vielmehr wird der Abschnitt der statischen Dichtung, welcher zur ölwannenseitigen Abdichtung vorgesehen ist, erst bei der Montage über die Fläche der Dichtungsaufnahme hinaus nach unten gegen die Ölwannendichtung gedrängt.

Eine maschinelle Bearbeitung des Gußteiles ist lediglich an der genannten zweiten Fläche erforderlich, um die geforderte geringe Toleranz zwischen Wellenachse und Unterseite des Motorblocks bzw. Kurbelgehäuses, an welcher die Ölwanne abgedichtet anzubringen ist, einhalten zu können.

Weitere Vorteile der Erfindung ergeben sich aus den übrigen Unteransprüchen.

Die Erfindung ist im folgenden anhand von Zeichnungen mit weiteren Einzelheiten näher erläutert.

Es zeigen:
- Fig. 1: eine auseinandergezogene Darstellung einer Kurbelwellenabdichtung nach dem Stand der Technik;
- Fig. 2: eine auseinandergezogene Darstellung einer Kurbelwellenabdichtung mit einer gemäß dem Verfahren nach der Erfindung vorgefertigten Dichtungsaufnahme;
- Fig. 3: einen Schnitt durch eine Wellenabdichtung nach der Erfindung während des Anspritzens eines Wellendichtringes und einer davon getrennten statischen Dichtung;
- Fig. 4: einen Teilschnitt durch eine Ausgestaltung des Wellendichtringes bei IV in Fig. 3, wobei eine Alternative gestrichelt dargestellt ist;
- Fig. 5: einen Teilschnitt nach der Linie V-V in Fig. 3 durch die statische Dichtung;
- Fig. 6: eine Draufsicht auf die Wellendichtung nach der Erfindung mit Blickrichtung auf die statische Dichtung;
- Fig. 7: eine Draufsicht auf die Wellenabdichtung in Blickrichtung auf das (hier nicht gezeigte) Kurbelgehäuse;
- Fig. 8: eine Einzelheit der statischen Dichtung mit angeformter Paßbuchse;
- Fig. 9: einen Schnitt zur Darstellung der Gestaltung der statischen Dichtung im Bereich der Ölwannenabdichtung in unmontiertem Zustand;
- Fig. 10: die Ausbildung nach Fig. 9 in am Kurbelgehäuse montiertem Zustand, jedoch vor der Endmontage von Ölwanne und Ölwannendichtung;
- Fig. 11: eine alternative Ausgestaltung der Anbringung des Wellendichtringes an der Dichtungsaufnahme;
- Fig. 12 und 13: Alternativen zur Ausbildung von Paßelementen an der statischen Dichtung.

In Fig. 2 sind gleiche bzw. gleichwirkende Teile wie in Fig. 1 mit gleichen Bezugszahlen belegt.

Die Wellenabdichtung 2 ist unter Verwendung eines Aluminium-Druckgußteiles 20 entsprechend dem Teil 20 nach dem Stand der Technik gemäß Fig. 1 als "Dichtungsmodul" zusammen mit einem dynamischen Wellendichtring 1 und einer statischen Dichtung 10 in noch zu beschreibender Weise vorgefertigt. Die statische Dichtung 10 ist nicht zu sehen, weil sie auf der der Stirnfläche des Kurbelgehäuses 6 zugewandten Seite des Gußteiles 20 vormontiert ist. Die Flachdichtung 3 kommt in Wegfall. Wie bei dem Stand der Technik nach Fig. 1 ist die Dichtungsaufnahme 2 über Paßbohrungen 24 und Paßstifte 61 an der Stirnfläche 62 des Kurbelgehäuses 6 zu fixieren. In montiertem Zustand ragt die Kurbelwelle 7 mit der Achse A durch die Durchlaßöffnung 21 zum Anschluß beispielsweise an ein Getriebe.

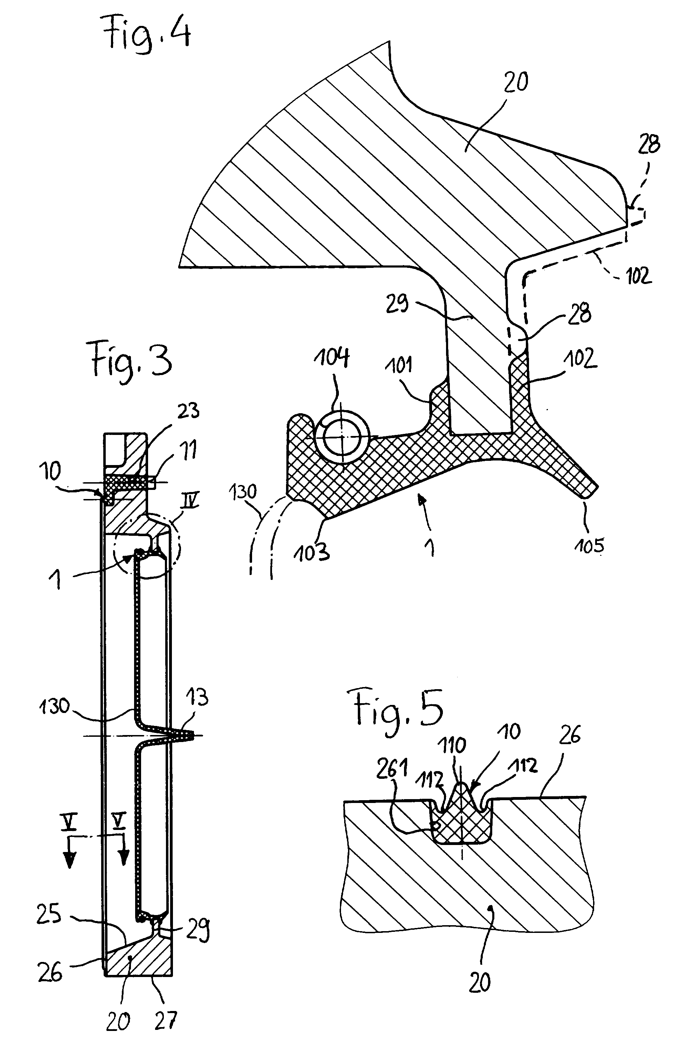

Die statische Dichtung 10 und der dynamische Wellendichtring 1 werden von derselben Seite des Gußteiles 20 aus angespritzt, nämlich von der dem Kurbelgehäuse 6 abgewandten Seite, und zwar über eine Mehrfachdüse mit einem einzigen Spritztaggregat in einem einzigen Arbeitsgang, wie dies Fig. 3 verdeutlicht. Das (nicht gezeigte) Formwerkzeug wird in einer konischen Fläche 25 des Gußteiles 20 zur Achse A zentriert. Dabei erfolgt das Anspritzen der statischen Dichtung über einen Anspritzpunkt 11 durch eine im oberen Abschnitt des Gußteiles 20 vorgesehene Durchgangsbohrung 23 hindurch, während die gleichzeitige Anspritzung des dynamischen Wellendichtringes 1 über einen Schirm 130 mit zentraler Anspritzstelle 13 erfolgt, derart, daß der Wellendichtring 1 über Stege 101, 102 beidseitig an einem radial nach innen stehenden Flansch 29 des Gußteiles 20 angebunden wird, wie Fig. 4 zeigt. Aus Fig. 4 ist außerdem der Aufbau des Wellendichtringes 1 mit der üblichen Dichtlippe 103, welche von einer Wurmfeder 104 an die (nicht gezeigte) Welle angedrückt wird, sowie Schutzlippe 105 zu erkennen. Die Anspritzung erfolgt also bei dem Ausführungsbeispiel nach Fig. 3 von der Dichtlippenseite her, könnte jedoch auch von der Schutzlippenseite her erfolgen.

Der in Fig. 4 rechte Steg 102 der Dichtung endet unterhalb einer an das Gußteil 20 angeformten Dichtleiste oder Verpressungsrippe 28, welche beim Schließen des (nicht gezeigten) Formwerkzeuges plastisch verformt wird und so verhindert, daß die elastomere Spritzmasse beim Verspritzen ausläuft.

Bei einer Alternative, die in Fig. 4 gestrichelt eingezeichnet ist, ist diese Verpressungsrippe 28 weiter oben an dem Gußteil 20 angebracht, und der Steg 102 des Wellendichtringes 1 ist zu dieser Verpressungsrippe nach oben gezogen.

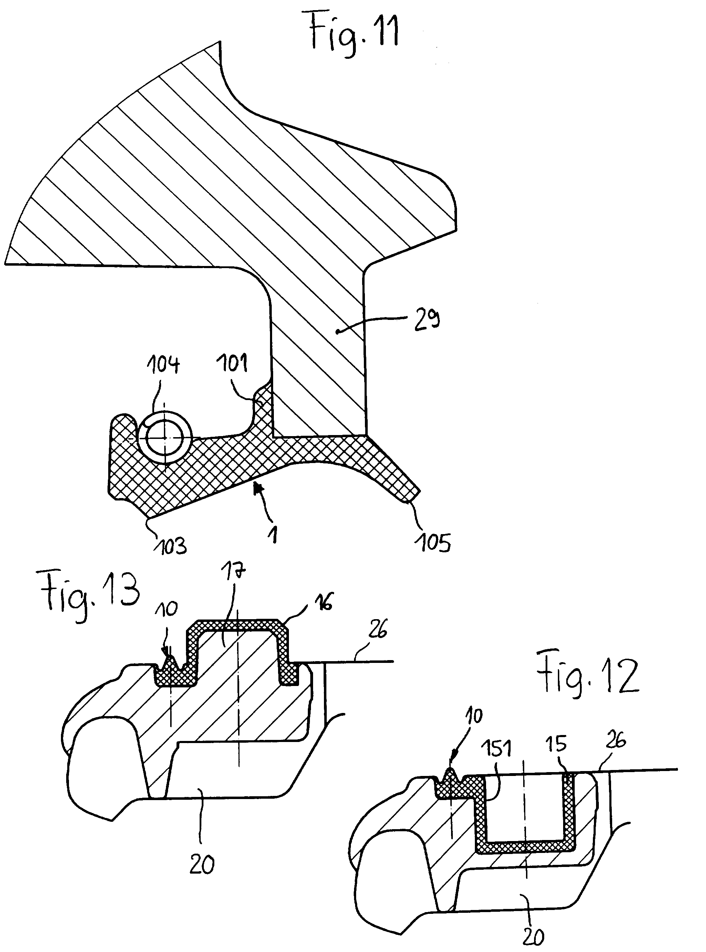

Bei einer weiteren Alternative gemäß Fig. 11 ist der Wellendichtring 1 nur einseitig mit einem Steg 101 an den Flansch 29 des Gußteiles angebunden; was die Herstellkosten weiter senkt.

Fig. 5 zeigt die Ausgestaltung der statischen Dichtung im Bereich der dem Kurbelgehäuse 6 zugewandten Fläche 26 des Gußteiles 20. Es ist ersichtlich, daß die statische Dichtung in einer Nut 261 aufgenommen ist, welche in dem genannten Bereich zwei Seitenwände hat. Die Dichtkante der statischen Dichtung 10 ist wellenförmig so ausgebildet, daß bei der Montage das über die Fläche hinausstehende Dichtmaterial der Dichtkante 110 in die Vertiefungen oder Wellentäler 112 verdrängt wird.

Die Fig. 9 und 10 zeigen die Ausbildung der statischen Dichtung 10 benachbart der unteren Fläche 27 des Gußteiles 20, welche zur Ölwanne 8 hinweist. Hier ist die Nut 261 zur unteren Seite hin offen, hat also nur eine obere Seitenwand. Die Dichtkante 110 ist nicht auf beiden Seiten von einer Vertiefung 112 eingesäumt, wie im Bereich gemäß Fig. 5, sondern nur auf der oberen Seite. Auf der unteren Seite weist die statische Dichtung 10 eine Verdickung 114 auf, die um ein Maß x gegenüber der Fläche 26 vorsteht, während die Unterfläche 116 der statischen Dichtung bündig mit der Fläche 27 ist.

Fig. 9 zeigt diese Einzelheiten bei noch nicht am Kurbelgehäuse montiertem Dichtungsmodul 2. Dagegen zeigt Fig. 10 eine Situation, in welcher der Dichtungsmodul 2 bereits am Kurbelgehäuse 6, jedoch noch nicht an der Ölwanne 8 montiert ist. In diesem Zustand ist die Dichtkante 110 in das obere Wellenteil 112 eingedrückt, so daß die Oberfläche der Dichtung bündig mit der Fläche 26 des Gußteiles 20 ist, die Dichtung 10 jedoch mit einem Wulst 117 von der Unterseite der Fläche 27 vorsteht. Dies gewährleistet beim Montieren der Ölwanne 8 mit zwischengelegter Ölwannendichtung 5 eine gute Abdichtung auch in diesem Bereich der Wellenabdichtung.

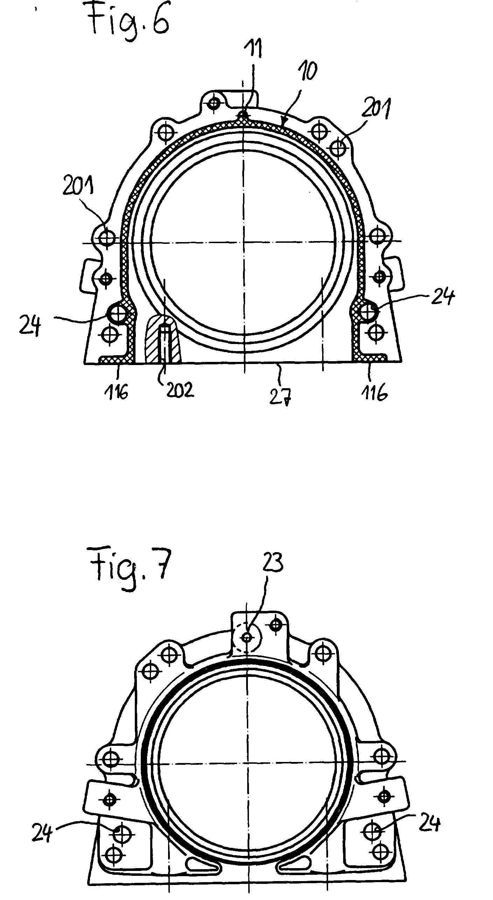

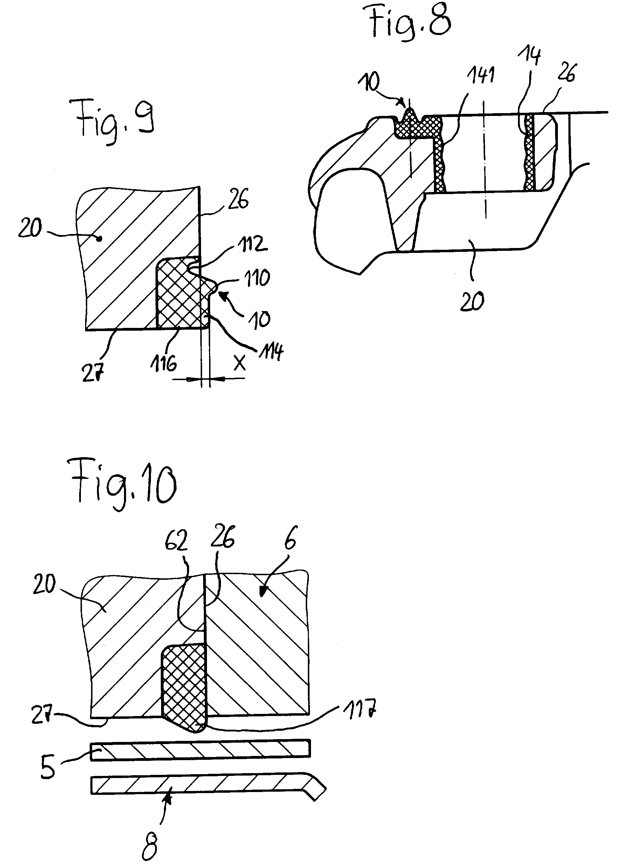

In der Draufsicht nach Fig. 6 ist die Gestalt der statischen Dichtung mit Angußpunkt 11 und den Bereichen 116 zur Anlage an der Ölwannendichtung 5 im Bereich der unteren, maschinell bearbeiteten unteren Fläche 27 des Gußteiles 20 besonders gut zu erkennen. Außer Durchgangslöchern 201 für Befestigungsschrauben zum Befestigen am Kurbelgehäuse 6 sind die Paßbohrungen 24 zu sehen, die von mit der statischen Dichtung 10 einteiligen Elastomerbuchsen 14 oder 15 (vergleiche die Fig. 8 und 12) ausgekleidet sind. Diese Elastomerbuchsen sind gemeinsam mit der statischen Dichtung in die Paßbohrungen 24 eingespritzt. Im Falle der Fig. 8 haben sie eine wellenförmige Innenkontur 141 und im Falle der Fig. 12 eine glatte Innenkontur 151. Um zu vermeiden, daß beim Aufschieben der Wellenabdichtung oder des Dichtungsmoduls 2 auf die Paßstifte 61 am Kurbelgehäuse 6 Luft im Sackloch gemäß Fig. 12 eingeschlossen wird, kann in die Auskleidung 15 mindestens eine axiale Nut eingearbeitet sein, über welche die Luft während der Montage entweichen kann.

In Fig. 6 ist eine Gewindebohrung 202 zum Befestigen des Randflansches der Ölwanne 8 mittels Schrauben erkennbar.

Angesichts der geringen einzuhaltenen Form- und Lagetoleranzen der Paßbohrungen 24 ist überraschend, daß diese Toleranzen mit der Elastomerauskleidung 14 oder 15 gehalten werden können. Einer der Gründe liegt darin, daß im (nicht gezeigten) Formwerkzeug selbst wesentlich feinere Toleranzen als für die Paßbohrungen 24 erforderlich sind, realisiert werden können, so daß die Lage der Paßbohrungen in Bezug auf die Achse A dann sehr genau eingehalten werden können, wenn erfindungsgemäß das Formwerkzeug an einer kegeligen Fläche 25 geführt ist, welche sich um mindestens einen Teilbereich des inneren Umfangs des Gußteiles 20 erstreckt. Da sich die Paßbohrung 24 wegen der Nachgiebigkeit der Elastomerauskleidung 14 oder 15 exakt auf den Durchmesser des von der Stirnfläche 62 des Kurbelgehäuses 6 wegragend Paßstiftes 61 einstellen kann, spielt die Toleranz des Bohrungsdurchmessers für die Lage der Kurbelwellenabdichtung 2 zum Kurbelgehäuse 6 keine Rolle mehr. Montageversuche haben die Richtigkeit dieser Überlegungen gezeigt und deutlich gemacht, daß eine ausreichend genaue Positionierung innerhalb der geforderten engen Toleranzen trotz der als unzulässig groß angesehene Toleranz des Bohrungsdurchmessers möglich war.

Die Fig. 13 zeigt eine Variante, bei welcher statt einer Auskleidung einer Bohrung ein Elastomer-Nippel 16 um einen vorspringenden Zapfen 17 an die statische Dichtung 10 angespritzt ist. Solche Nippel 16 fahren dann bei der Montage in am Kurbelgehäuse 6 vorgesehene Paßbohrungen ein.

Zum Herstellen der Wellenabdichtung wird allein die Fläche 27 maschinell bearbeitet, um die durch Druckgießen nicht einhaltbare geringe Toleranz von wenigen Hundertstel mm zwischen dem Abstand der Achse A der Kurbelwelle zur Unterseite des Kurbelgehäuses (Anlagefläche für die Ölwannendichtung 5 und die Ölwanne 8) einhalten zu können.

Beim Anspritzen der Dichtungen 1, 10 wird das Gußteil 20 in das Formwerkzeug eingelegt und beim Schließen dieses Werkzeuges geklemmt. Aufgrund der Verpressungsrippen oder Dichtleisten 28, welche beim Schließen des Formwerkzeuges plastisch verformt werden, lassen sich die engen Toleranzen einhalten, mit denen das Formwerkzeug hergestellt werden muß, damit dieses allseitig schließen kann, so daß kein Elastomermaterial aus dem zu füllenden Formvolumen austreten kann. Die Verpressungsrippen 28 wirken somit als Toleranzausgleicher, welche eine einwandfreie Abdichtung des Formvolumens ermöglichen.

## Patentansprüche

1. Verfahren zum Herstellen einer Wellenabdichtung für eine aus einem Gehäuse (6) herausgeführte Welle (7), insbesondere der im Kurbelgehäuse eines Kraftfahrzeuges aufgenommenen Kurbelwelle, mit einer als metallisches Gußteil (20) ausgeführten Dichtungsaufnahme (2) mit Durchlaßöffnung (21) für die Welle (7), einem dynamischen Wellendichtring (1) aus einem elastomeren Material, der in die Durchlaßöffnung (21) der Dichtungsaufnahme (2)eingesetzt ist, und einer von dem Wellendichtring getrennten statischen Dichtung (10) aus elastomerem Material, die auf der dem Gehäuse (6) zugewandten Seite der Dichtungsaufnahme (2) angeordnet ist, dadurch **gekennzeichnet,** daß der Wellendichtring (1) und die davon getrennte statische Dichtung (10) von derselben Seite her über zwei getrennte Anspritzstellen (11, 13) an die Dichtungsaufnahme (2) in einem Arbeitsgang angespritzt werden.

2. Verfahren nach Anspruch 1, dadurch **gekennzeichnet,** daß die statische Dichtung (10) über mindestens einen Angußpunkt (11) und der Wellendichtring (1) über einen Ringkanal (130) mit zentraler Anspritzstelle (13) an die Dichtungsaufnahme (2) angespritzt werden, wobei der Punktanguß (11) und die zentrale Anspritzstelle (13) von Mehrfachdüsen eines einzigen Spritzwerkzeuges gespeist werden.

3. Verfahren nach Anspruch 2, dadurch **gekennzeichnet,** daß mit der statischen Dichtung (10) zusammenhängende elastomere Paßelemente (14, 15, 16) zum Anpassen der Dichtungsaufnahme (2) an das Gehäuse (6) angespritzt werden.

4. Verfahren nach einem der Ansprüche 1 bis 3, dadurch **gekennzeichnet,** daß an dem Gußteil (20) lediglich eine zu der genannten Seite des Gußteiles (20) senkrechte Fläche (27), welche einer Ölwanne (8) gegenübersteht, maschinell bearbeitet wird und an die statische Dichtung (10) zu dieser Fläche (27) hin abdichtende Abschnitte (114, 116) angespritzt werden.

5. Wellenabdichtung für eine aus einem Gehäuse herausgeführte Welle, insbesondere der im Kurbelgehäuse (6) eines Kraftfahrzeuges aufgenommenen Kurbelwelle (7), mit einer als metallisches Gußteil (20) ausgeführten Dichtungsaufnahme (2) mit Durchlaßöffnung (21) für die Welle (7), einem dynamischen Wellendichtring (1) aus einem elastomeren Material, der in die Durchlaßöffnung (21) der Dichtungsaufnahme (2) eingesetzt ist, und einer von dem Wellendichtring getrennten statischen Dichtung (10) aus dem gleichen elastomeren Material wie der Wellendichtring (1), die auf der dem Gehäuse (6), zugewandten Seite der Dichtungsaufnahme (2) angeordnet ist, dadurch **gekennzeichnet,** daß die Dichtungsaufnahme (2) eine zur Drehachse (A) der Welle (7) konzentrische konische Fläche (25) zur Zentrierung in einem Formwerkzeug für das gemeinsame Anspritzen der getrennten Dichtungen (1, 10) an die Dichtungsaufnahme (2) sowie mindestens eine Angußbohrung (23) im Gußteil (20) zum Schaffen eines Angußpunktes (11) für die statische Dichtung (10) aufweist.

6. Wellenabdichtung nach Anspruch 5, dadurch **gekennzeichnet**, daß mit der statischen Dichtung (10) elastomere Paßelemente (14, 15, 16) zusammenhängend ausgebildet sind.

7. Wellenabdichtung nach Anspruch 6, dadurch **gekennzeichnet**, daß die elastomeren Paßelemente (14, 15) Paßbohrungen (24) im Gußteil (20) der Dichtungsaufnahme (2) auskleiden, in die am Gehäuse (6) angeordnete Paßstifte (61) passen.

8. Wellenabdichtung nach Anspruch 6, dadurch **gekennzeichnet**, daß die elastomeren Paßelemente als Nippel (16) ausgebildet sind, welche in Paßbohrungen des Gehäuses (20) passen.

9. Wellenabdichtung nach einem der Ansprüche 5 bis 8, dadurch **gekennzeichnet**, daß an dem Gußteil (20) mindestens eine Verpressungsrippe (28) angegossen ist, welche beim Schließen des Formwerkzeuges zum Anspritzen der Dichtungen (1, 10) plastisch verformt wird.

10. Wellenabdichtung nach einem der Ansprüche 5 bis 9, dadurch **gekennzeichnet**, daß die statische Dichtung (10) in einer Nut (261) am in einer dem Gehäuse (6) zugewandten ersten Fläche (26) der Dichtungsaufnahme (2) sitzt und daß das Gehäuse eine untere zweite, zur ersten Fläche (26) senkrechte Fläche (27) aufweist, die an einer Ölwannendichtung (5) einer ölwanne (8) anliegt und zu der hin die Nut offen ist, und daß die statische Dichtung (10) im Bereich der zweiten Fläche (27) eine zum Gehäuse (6) hin über die erste Fläche (26) vorstehende Dichtkante (110) aufweist, die so bemessen ist, daß bei an das Gehäuse (6) angedrückter Dichtungsaufnahme (2) das Elastomermaterial über die zweite Fläche (26) hinaus nach unten gegen die Ölwannendichtung in Gestalt eines Wulstes (117) verdrängt wird.

11. Wellenabdichtung nach einem der Ansprüche 5 bis 9, dadurch **gekennzeichnet**, daß der Wellendichtring (1) mit mindestens einem Steg (101, 102) an einen nach innen weisenden radialen Flansch (29) des Gußteiles (20) angebunden ist.

## Claims

1. Method for the manufacture of shaft seal for a shaft (7) extending out of a casing (6) and in particular of acrankshaft received in the crankcase of a motor vehicle, with a gasket receptacle (2) in the form of a metal die casting (20) with a passage opening (21) for the shaft (7), a dynamic shaft seal ring (1) made from an elastomer material, which is placed in the passage opening (21) of the gasket receptacle (2) and a static gasket (10) made from elastomer material which is separate from the shaft seal ring and which is located on the side of the gasket receptacle (2) facing the casing (6), characterized in that the shaft seal ring (1) and the static gasket (10) separate therefrom are moulded in one operation and from the same side onto the gasket receptacle (2) via two separate moulding points (11, 13).

2. Method according to claim 1, characterized in that by means of at least one runner point (11) the static gasket (10) is moulded to the gasket receptacle (2) and the shaft seal ring (1) is moulded thereto by means of a circular channel (130) with a central moulding point (13), the spot runner (11) and the central moulding point (13) being supplied by multiple cavity dies of a single injection moulding tool.

3. Method according to claim 2, characterized in that onto the casing (6) are moulded elastomer fitting elements (14, 15, 16) linked with the static gasket (10) for adapting the gasket receptacle (2).

4. Method according to one of the claims 1 to 3, characterized in that on the die casting (20) machining only takes place of a face (27), perpendicular to said side of the casting (20) and which faces an oil sump (8) and on the static gasket (10) are moulded portions (114, 116) sealing towards said face (27).

5. Shaft sal for a shaft (7) moved out of a casing (6) and in particular the crankshaft received in the crankcase of a motor vehicle, with a gasket receptacle (2) in the form of a metal die casting (20) with a passage opening (21) for the shaft (7), a dynamic shaft seal ring (1) made from an elastomer material, which is placed in the passage opening (21) of the gasket receptacle (2) and a static gasket (10) made from elastomer material which is separate from the shaft seal ring and which is located on the side of the gasket receptacle (2) facing the casing (6 ), characterized in that the gasket receptacle (2) has a conical face (25) concentric to the rotation axis (A) of the shaft (7) for centring in a moulding tool for the joint moulding of the separate gaskets (1, 10) on the gasket receptacle (2), as well as at least one runner bore (23) in the die casting (10) for forming a spot runner (11) for a static gasket (10).

6. Shaft seal according to claim 5, characterized in that elastomer fitting elements (14, 15, 16) are constructed linked with the static gasket (10).

7. Shaft seal according to claim 6, characterized in that the elastomer fitting elements (14, 15) line fitting bores (24) in the casting (20) of the gasket receptacle (2) and into which fit the fitting pins (61) located on the casing (6).

8. Shaft seal according to claim 6, characterized in that the elastomer fitting elements are constructed as nipples (16), which fit into fitting bores of the casing (20).

9. Shaft seal according to one of the claims 5 to 8, characterized in that onto the die casting (20) is cast at least one pressing rib (28), which is plastically deformed on closing the moulding tool for the moulding of the gasket (110).

10. Shaft seal according to one of the claims 5 to 9, characterized in that the static gasket (10) is located in a groove (261) on the first face (26) of the gasket receptacle (2) facing the casing (6) and that the latter has a second face (27) perpendicular to the first face (26) and which engages on an oil sump gasket (5) of an oil sump (8) and the groove is open towards it and that the static gasket (10) is provided in the vicinity of the second face (27) with a sealing edge (110), projecting over the first face (26) towards the casing (6) and which is dimensioned in such a way that when the gasket receptacle (2) is pressed onto the casing (6) the elastomer material is displaced over and beyond the second face (26) downwards against the oil sump gasket in the form of a bead (117).

11. Shaft seal according to one of the claims 5 to 9, characterized in that the shaft seal ring (1) is fastened by means of at least one web (101, 102) to an inwardly directed radial flange (29) of the casting (20).

## Revendications

1. Procédé de réalisation d'un joint d'arbre destiné à un arbre (7) qui déborde d'un carter (6), en particulier à un vilebrequin logé dans le carter de vilebrequin d'un véhicule automobile, comprenant un logement de joint (2) formé d'une pièce de fonderie métallique (20) et comprenant un trou (21) de passage de l'arbre (7), une bague d'étanchéité dynamique d'arbre (1) en matière élastomère qui se place dans le trou de passage (21) du logement de joint (2), ainsi qu'un joint statique en matière élastomère (10) indépendant de la bague d'étanchéité d'arbre et qui se dispose sur le côté du logement de joint (2) qui est tourné vers le carter (6), caractérisé en ce que la bague d'étanchéité d'arbre (1) et le joint statique (10) qui est indépendant de celle-ci sont coulés par injection par le même côté, par deux lieux séparés d'injection (11, 13), sur le logement de joint (2), en une passe de travail.

2. Procédé selon la revendication 1, caractérisé en ce que le joint statique (10) est coulé par injection par au moins un point d'entrée (11) et la bague d'étanchéité d'arbre (1) est coulée par injection par un canal annulaire (130) comportant un lieu central d'injection (13) sur le logement de joint (2), l'entrée ponctuelle (11) et le lieu central d'injection (13) étant alimentés par des buses multiples d'un unique outil d'injection.

3. Procédé selon la revendication 2, caractérisé en ce que des éléments d'ajustage en élastomère (14, 15, 16) sont coulés par injection avec le joint statique (10) de manière à être monobloc avec celui-ci pour l'adaptation du logement de joint (2) sur le carter (6).

4. Procédé selon l'une des revendications 1 à 3, caractérisé en ce que seule une surface (27) de la pièce de fonderie (20) qui est perpendiculaire audit côté de la pièce de fonderie (20) et qui est en face de la cuvette-carter à huile (8) est usinée à la machine sur la pièce de fonderie (20) et des parties (114, 116) assurant l'étanchéité sur cette surface (27) sont coulées par injection sur le joint statique (10).

5. Joint d'arbre destiné à un arbre qui déborde d'un carter, en particulier à un vilebrequin (7) logé dans le carter de vilebrequin (6) d'un véhicule automobile, comprenant un logement de joint (2) formé d'une pièce de fonderie métallique (20) qui comporte un trou (21) de passage de l'arbre (7), une bague d'étanchéité dynamique d'arbre (1) en matière élastomère qui est placée dans le trou de passage (21) du logement de joint (2) et un joint statique (10) indépendant de la bague d'étanchéité d'arbre, en la même matière élastomère que la bague d'étanchéité d'arbre (1) et disposé sur le côté du logement de joint (2) qui est tourné vers le carter (6), caractérisé en ce que le logement de joint (2) comprend une surface conique (25) concentrique à l'axe de rotation (A) de l'arbre (7) et destinée à son centrage dans un outil de moulage destiné à l'injection simultanée des joint séparés (1, 10) sur le logement de joint (2), ainsi qu'au moins un trou d'entrée de coulée (23) réalisé dans la pièce de fonderie (20) pour la création d'une entrée d'injection (11) destinée au joint statique (10).

6. Joint d'arbre selon la revendication 5, caractérisé en ce que des éléments d'ajustage en élastomère (14, 15, 16) sont réalisés en monobloc avec le joint statique (10).

7. Joint d'arbre selon la revendication 6, caractérisé en ce que les éléments d'ajustage en élastomère (14, 15) revêtent des trous d'ajustage (24) que comporte la pièce de fonderie (20) du logement de joint (2) et dans lesquels s'ajustent des pions d'ajustage (61) disposés sur le carter (6).

8. Joint d'arbre selon la revendication 6, caractérisé en ce que les éléments d'ajustage en élastomère sont conformés en mamelons (16) qui s'ajustent dans des trous d'ajustage du carter (20).

9. Joint d'arbre selon l'une des revendications 5 à 8, caractérisé en ce qu'au moins une nervure de compression (28) est venue de moulage avec la pièce de fonderie (20) et subit une déformation plastique lors de la fermeture de l'outil de moulage pour l'injection des joint (1, 10).

10. Joint d'arbre selon l'une des revendications 5 à 9, caractérisé en ce que le joint statique (10) est logé dans une rainure (261) d'une première surface (26) du logement de joint (2) qui est tournée vers le carter et en ce que le carter comprend une seconde surface inférieure (27) perpendiculaire à la première surface (26), prenant appui contre un joint de cuvette-carter à huile (5) d'une cuvette-carter à huile (8) et sur laquelle la rainure est ouverte et en ce que le joint statique (10) comprend dans la région de la seconde surface (27) une arête d'étanchéité (110) qui est saillante sur la première surface (26) vers le carter (6) et qui est dimensionnée de manière que, lorsque le logement de joint (2) est serré contre le carter (6), la matière élastomère soit refoulée au-delà de la seconde surface (26), vers le bas, sous forme d'un bourrelet (17), contre le joint de la cuvette-carter à huile.

11. Joint d'arbre selon l'une des revendications 5 à 9, caractérisé en ce que la bague d'étanchéité d'arbre (1) est liée par au moins une nervure (101, 102) à une bride radiale (29), tournée vers l'intérieur, de la pièce de fonderie (20).
